# FASCICULE DE BREVET EUROPEEN

(11) **EP 4 056 801 B1**
(45) Date de publication et mention de la délivrance du brevet: **20.03.2024**
(21) Numéro de dépôt: 22161320.1
(22) Date de dépôt: 10.03.2022
(51) Int. Cl.: E06B 9/72, H02K 5/22, H02K 7/102, H02K 7/10, H02K 7/14

(54) **ACTIONNEUR ÉLECTROMÉCANIQUE ET DISPOSITIF D'OCCULTATION COMPRENANT UN TEL ACTIONNEUR**
ELEKTROMECHANISCHES STELLGLIED UND VERDUNKELUNGSVORRICHTUNG, DIE EIN SOLCHES STELLGLIED UMFASST
ELECTROMECHANICAL ACTUATOR AND BLACKOUT DEVICE COMPRISING SUCH AN ACTUATOR

(30) Priorité: 11.03.2021 FR 2102379
(43) Date de publication de la demande: 14.09.2022
(73) Titulaire: SIMU, 70100 Arc-lès-Gray (FR)
(72) Inventeur: MOUGIN, Yoan, 21310 Belleneuve (FR)
(74) Mandataire: Lavoix

(56) Documents cités:
- EP-A2- 1 848 095
- DE-U1- 29 818 023
- GB-A- 2 471 140

## Description

La présente invention concerne un actionneur électromécanique pour un dispositif d'occultation, autrement dit un actionneur électromécanique d'un dispositif d'occultation. Un tel actionneur électromécanique comprend un dispositif électromagnétique. Ce type de dispositif électromagnétique est plus particulièrement adapté pour un actionneur électromécanique dit tubulaire.

La présente invention concerne également un dispositif d'occultation comprenant un écran enroulable sur un tube d'enroulement entraîné en rotation par un tel actionneur électromécanique.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile d'occultation, tel qu'un store, un rideau, un volet ou tout autre matériel équivalent, appelé par la suite écran.

On connaît déjà le document GB 2 471 140 A qui décrit un actionneur électromécanique pour un dispositif de protection contre un incendie. L'actionneur électromécanique comprend un carter, un moteur électrique, un réducteur, un dispositif électromagnétique, un arbre de sortie et un dispositif de connexion électrique. Le moteur électrique et le dispositif électromagnétique sont montés à l'intérieur du carter. Le dispositif électromagnétique présente un premier état, dans lequel l'arbre de sortie de l'actionneur électromécanique est bloqué en rotation par rapport au carter, et un deuxième état, dans lequel l'arbre de sortie de l'actionneur électromécanique est libre en rotation par rapport au carter. Le dispositif électromagnétique est relié au dispositif de connexion électrique au moyen de fils électriques. En outre, le dispositif électromagnétique comprend un boîtier.

Ce document est muet concernant le maintien en position des fils électriques d'alimentation en énergie électrique du dispositif électromagnétique à partir du dispositif de connexion électrique.

Dans un tel actionneur électromécanique, les fils électriques d'alimentation en énergie électrique du dispositif électromagnétique sont glissés à l'intérieur du carter de l'actionneur électromécanique en même temps que l'insertion du dispositif électromagnétique à l'intérieur du carter.

Par conséquent, ces fils électriques risquent d'être endommagés, voire sectionnés, lors de l'insertion du dispositif électromagnétique à l'intérieur du carter. Ce risque se prolonge pendant la durée de vie de l'actionneur électromagnétique.

La présente invention a pour but de résoudre les inconvénients précités et de proposer un actionneur électromécanique pour un dispositif d'occultation, ainsi qu'un dispositif d'occultation comprenant un tel actionneur électromécanique, permettant de maintenir en position des fils électriques d'alimentation en énergie électrique du dispositif électromagnétique par rapport à un carter de l'actionneur électromécanique, d'une part, lors de l'insertion du dispositif électromagnétique à l'intérieur du carter et, d'autre part, pendant toute la durée de vie de l'actionneur électromécanique.

A cet égard, la présente invention vise, selon un premier aspect, un actionneur électromécanique pour un dispositif d'occultation,
l'actionneur électromécanique comprenant au moins :
   - un carter,
   - un moteur électrique,
   - un dispositif électromagnétique,
   - un arbre de sortie, et
   - un dispositif de connexion électrique,
le moteur électrique et le dispositif électromagnétique étant montés à l'intérieur du carter,
le dispositif électromagnétique présentant un premier état, dans lequel le dispositif électromagnétique bloque l'arbre de sortie de l'actionneur électromécanique en rotation par rapport au carter, et un deuxième état, dans lequel l'arbre de sortie de l'actionneur électromécanique est libre en rotation par rapport au carter,
le dispositif électromagnétique étant relié au dispositif de connexion électrique au moyen de fils électriques, et
le dispositif électromagnétique comprenant au moins un boîtier.

Selon l'invention, l'actionneur électromécanique comprend, en outre, une agrafe. Le boîtier comprend au moins une gorge. L'agrafe est montée sur le boîtier et est logée au moins en partie dans la gorge du boîtier. En outre, les fils électriques sont maintenus en position dans la gorge du boîtier au moyen de l'agrafe.

Ainsi, l'agrafe permet de maintenir en position les fils électriques d'alimentation en énergie électrique du dispositif électromagnétique à l'intérieur de la gorge du boîtier du dispositif électromagnétique, d'une part, lors de l'insertion du dispositif électromagnétique à l'intérieur du carter et, d'autre part, pendant toute la durée de vie de l'actionneur électromécanique.

De cette manière, le maintien en position des fils électriques d'alimentation en énergie électrique du dispositif électromagnétique par l'agrafe permet d'éviter d'endommager, voire de sectionner, ces fils électriques, lors de l'insertion du dispositif électromagnétique à l'intérieur du carter.

Par conséquent, le maintien en position des fils électriques d'alimentation en énergie électrique du dispositif électromagnétique par l'agrafe permet de garantir la fiabilité de fonctionnement de l'actionneur électromécanique, notamment en évitant qu'un tube d'enroulement du dispositif d'occultation soit entraîné en rotation par le poids d'un écran ou d'une barre de charge à cause d'un défaut d'alimentation électrique du dispositif électromagnétique.

En outre, l'agrafe permet de garantir que le maintien en position des fils électriques d'alimentation en énergie électrique du dispositif électromagnétique à l'intérieur de la gorge du boîtier du dispositif électromagnétique ne se détériorera pas, en particulier par rapport à un élément de maintien temporaire réalisé au moyen d'un adhésif pouvant se décoller, soit lors de l'insertion du dispositif électromagnétique à l'intérieur du carter soit au cours de la durée de vie de l'actionneur électromécanique.

Par ailleurs, le maintien en position des fils électriques d'alimentation en énergie électrique du dispositif électromagnétique par l'agrafe permet de faciliter l'assemblage de l'actionneur électromécanique, notamment lors de l'insertion du dispositif électromagnétique à l'intérieur du carter.

Par conséquent, l'assemblage de l'actionneur électromécanique ne nécessite pas une dextérité particulière de la part d'un opérateur de production, notamment dans le cas où l'insertion du dispositif électromagnétique à l'intérieur du carter est mise en oeuvre manuellement.

Selon une caractéristique avantageuse de l'invention, la gorge du boîtier présente une surface extérieure. En outre, les fils électriques sont maintenus en position entre la surface extérieure de la gorge du boîtier et l'agrafe.

Selon une autre caractéristique avantageuse de l'invention, le carter comprend une surface interne. En outre, l'agrafe est disposée au moins en partie entre la surface extérieure de la gorge du boîtier et la surface interne du carter.

Selon une autre caractéristique avantageuse de l'invention, le boîtier comprend, en outre, une première niche et une deuxième niche. L'agrafe comprend au moins un premier élément de fixation et au moins un deuxième élément de fixation. En outre, le premier élément de fixation de l'agrafe est logé à l'intérieur de la première niche du boîtier et le deuxième élément de fixation de l'agrafe est logé à l'intérieur de la deuxième niche du boîtier.

Selon une autre caractéristique avantageuse de l'invention, la première niche du boîtier est ménagée sur un premier côté du boîtier et la deuxième niche du boîtier est ménagée sur un deuxième côté du boîtier, le deuxième côté du boîtier étant opposé au premier côté du boîtier. En outre, le premier élément de fixation de l'agrafe est disposé au niveau d'une première extrémité de l'agrafe et le deuxième élément de fixation de l'agrafe est disposé au niveau d'une deuxième extrémité de l'agrafe, la deuxième extrémité de l'agrafe étant opposée à la première extrémité de l'agrafe.

Selon une autre caractéristique avantageuse de l'invention, l'agrafe est réalisée au moyen d'un fil métallique plié.

Selon une autre caractéristique avantageuse de l'invention, le premier élément de fixation de l'agrafe est réalisé par deux crochets formés à partir du fil métallique plié. En outre, le deuxième élément de fixation de l'agrafe comprend au moins une partie courbée du fil métallique plié.

Selon une autre caractéristique avantageuse de l'invention, l'agrafe comprend, en outre, plusieurs parties cintrées. En outre, les fils électriques sont maintenus en position dans la gorge du boîtier au moyen des parties cintrées de l'agrafe.

Selon une autre caractéristique avantageuse de l'invention, le moteur électrique comprend au moins un rotor et un stator. En outre, le dispositif électromagnétique est accouplé avec le rotor du moteur électrique.

La présente invention vise, selon un deuxième aspect, un dispositif d'occultation comprenant un actionneur électromécanique et un écran enroulable sur un tube d'enroulement entraîné en rotation par l'actionneur électromécanique conforme à l'invention.

Ce dispositif d'occultation présente des caractéristiques et avantages analogues à ceux décrits précédemment en relation avec l'actionneur électromécanique selon l'invention, tel que mentionné ci-dessus.

Selon une caractéristique avantageuse de l'invention, le dispositif d'occultation est un dispositif de protection contre un incendie.

D'autres particularités et avantages de l'invention apparaîtront encore dans la description ci-après, faite en référence aux dessins annexés, donnés à titre d'exemples non limitatifs et dans lesquels :
[Fig 1] la figure 1 est une vue schématique en coupe transversale d'une installation d'occultation, en particulier de protection contre un incendie, conforme à un mode de réalisation de l'invention ;
[Fig 2] la figure 2 est une vue schématique en perspective de l'installation illustrée à la figure 1 ;
[Fig 3] la figure 3 est une vue schématique en coupe axiale et partielle, de principe, de l'installation illustrée aux figures 1 et 2, montrant un actionneur électromécanique de cette installation ;
[Fig 4] la figure 4 est une vue schématique en coupe de l'actionneur électromécanique illustré à la figure 3 ;
[Fig 5] la figure 5 est une vue schématique en perspective d'un dispositif électromagnétique et d'un rotor de l'actionneur électromécanique illustré aux figures 3 et 4 ;
[Fig 6] la figure 6 est une vue schématique en perspective et éclatée du dispositif électromagnétique et du rotor de l'actionneur électromécanique, illustrés à la figure 5 ; et

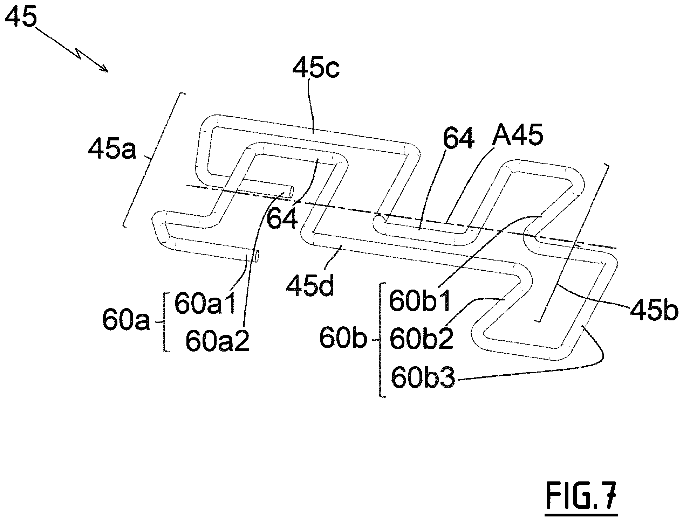

[Fig 7] la figure 7 est une vue schématique en perspective d'une agrafe de l'actionneur électromécanique illustré aux figures 3 à 6.

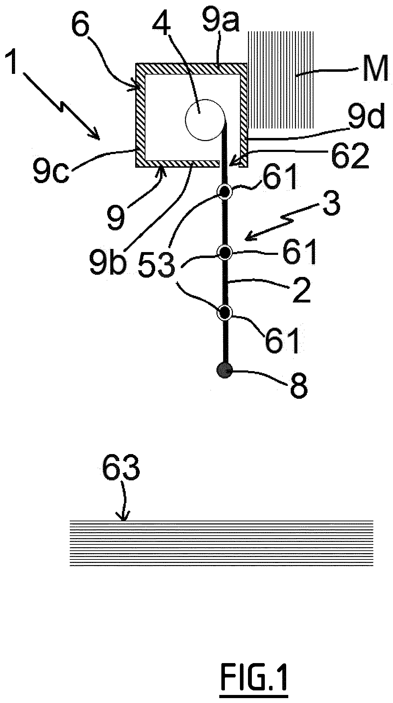

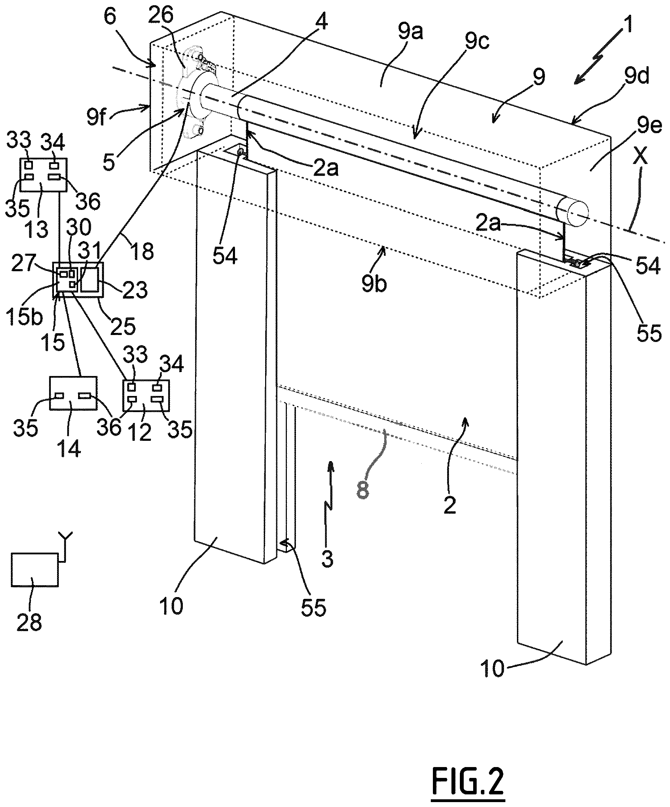

On décrit tout d'abord, en référence aux figures 1 et 2, une installation 1, comprenant un dispositif de fermeture, d'occultation ou de protection solaire 3, cette installation 1 étant conforme à un mode de réalisation de l'invention et installée dans un bâtiment. Cette installation 1 est équipée d'un écran 2 appartenant au dispositif de fermeture, d'occultation ou de protection solaire 3, en particulier un store motorisé.

Le dispositif de fermeture, d'occultation ou de protection solaire 3 est par la suite appelé « dispositif d'occultation ». Le dispositif d'occultation 3 comprend l'écran 2.

Le dispositif d'occultation 3 peut être un store, notamment un store comprenant une toile enroulable, ou un volet roulant. La présente invention s'applique à tous les types de dispositif d'occultation.

Avantageusement, le dispositif d'occultation 3 est un dispositif de protection contre un incendie.

Ainsi, le dispositif de protection contre un incendie permet de séparer, autrement dit de canaliser, des fumées et, éventuellement, des émanations dans et autour d'un bâtiment, ainsi que de former une barrière, en particulier thermique, contre des flammes, lors d'un incendie.

On décrit, en référence aux figures 1 à 3, un dispositif de protection contre un incendie conforme à un mode de réalisation de l'invention.

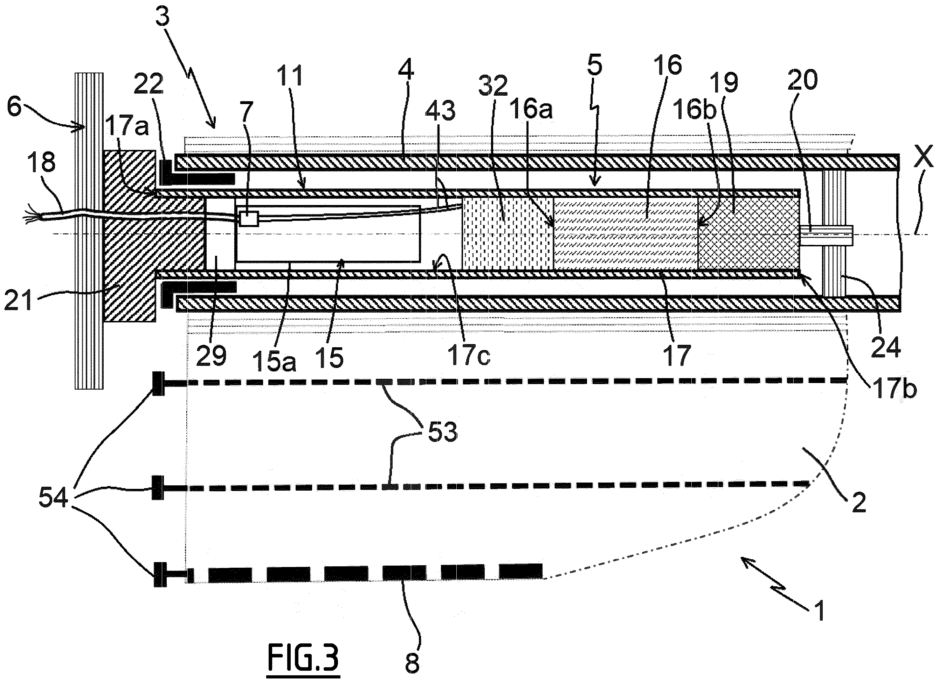

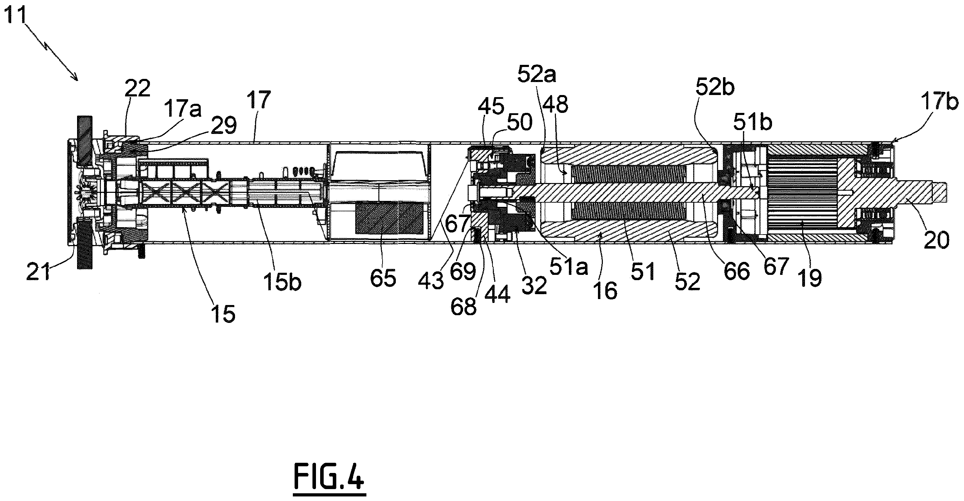

Le dispositif d'occultation 3 comprend un dispositif d'entraînement motorisé 5. Le dispositif d'entraînement motorisé 5 comprend un actionneur électromécanique 11 illustré aux figures 3 et 4.

Le dispositif d'entraînement motorisé 5 et, par conséquent, le dispositif d'occultation 3 comprend, en outre, un tube d'enroulement 4. En outre, le tube d'enroulement 4 est agencé de sorte à être entraîné en rotation par l'actionneur électromécanique 11.

Avantageusement, le tube d'enroulement 4 peut être réalisé en aluminium ou dans un autre métal.

Ici, l'écran 2 est enroulable sur le tube d'enroulement 4.

Ainsi, l'écran 2 du dispositif d'occultation 3 est enroulé sur le tube d'enroulement 4 ou déroulé autour de celui-ci, le tube d'enroulement 4 étant entraîné par le dispositif d'entraînement motorisé 5, en particulier par l'actionneur électromécanique 11.

De cette manière, l'écran 2 est mobile entre une position enroulée, en particulier haute, et une position déroulée, en particulier basse, et inversement.

L'écran 2 du dispositif d'occultation 3 est configuré pour s'enrouler et se dérouler autour du tube d'enroulement 4, dont le diamètre intérieur est supérieur au diamètre externe de l'actionneur électromécanique 11, de sorte que l'actionneur électromécanique 11 peut être inséré dans le tube d'enroulement 4, lors de l'assemblage du dispositif d'occultation 3.

Avantageusement, l'écran 2 est un rideau enroulable, en particulier en toile, pouvant être ignifuge.

En pratique, la toile formant l'écran 2 est une toile ignifuge configurée pour résister au feu.

Avantageusement, la toile peut être réalisée dans un matériau composé de fibres de verre tissées. En outre, la toile peut comprendre une couche d'aluminium.

Dans une telle installation 1 de protection contre un incendie, l'actionneur électromécanique 11 permet de mettre en rotation le tube d'enroulement 4, de sorte à enrouler l'écran 2 et, éventuellement, à dérouler l'écran 2.

Ainsi, l'écran 2 est configuré pour être remonté au moyen de l'actionneur électromécanique 11, par enroulement autour du tube d'enroulement 4. En outre, l'écran 2 est configuré pour être abaissé par gravité et, éventuellement, au moyen de l'actionneur électromécanique 11, par déroulement par rapport au tube d'enroulement 4.

Avantageusement, le dispositif d'occultation 3 comprend un dispositif de maintien 6.

Avantageusement, le dispositif de maintien 6 comprend un caisson 9. En outre, le tube d'enroulement 4 et au moins une partie de l'écran 2 sont logés à l'intérieur du caisson 9, en particulier dans une configuration assemblée du dispositif d'occultation 3.

Avantageusement, le caisson 9 est fixé à un plafond d'une pièce du bâtiment, à un mur M du bâtiment ou à une paroi inférieure d'un balcon, ou encastré dans un plafond suspendu d'une pièce du bâtiment.

Avantageusement, le caisson 9 comprend une paroi supérieure 9a, une paroi inférieure 9b, une paroi avant 9c, une paroi arrière 9d, une première paroi latérale 9e et une deuxième paroi latérale 9f.

Avantageusement, la paroi inférieure 9b du caisson 9 comprend une fente 62, de sorte à permettre le passage de l'écran 2 au travers de celle-ci, lors de l'enroulement et du déroulement de l'écran 2.

Avantageusement, le dispositif de maintien 6 peut comprendre, en outre, deux supports 26. Un support 26 est disposé à chaque extrémité du tube d'enroulement 4, en particulier dans la configuration assemblée du dispositif d'occultation 3.

Ainsi, le tube d'enroulement 4 est maintenu par l'intermédiaire des supports 26. Un seul des supports 26 est visible à la figure 2, à proximité de la deuxième paroi latérale 9f. L'autre support 26, qui n'est pas représenté, est disposé à proximité de la première paroi latérale 9e. Les supports 26 permettent de lier mécaniquement le dispositif d'occultation 3 à la structure du bâtiment, notamment au mur M du bâtiment et, en particulier, au caisson 9.

Ici et comme illustré à la figure 2, les supports 26 sont logés à l'intérieur du caisson 9.

En variante, non représentée, le tube d'enroulement 4 peut être maintenu par l'intermédiaire du caisson 9, en particulier par l'intermédiaire des première et deuxième parois latérales 9e, 9f du caisson 9, sans utiliser de supports, tels que les supports 26 mentionnés ci-dessus.

L'actionneur électromécanique 11 est, par exemple, de type tubulaire. Celui-ci permet de mettre en rotation le tube d'enroulement 4 autour d'un axe de rotation X, de sorte à déplacer, en particulier dérouler ou enrouler, l'écran 2 du dispositif d'occultation 3.

Dans un état monté du dispositif d'occultation 3, l'actionneur électromécanique 11 est inséré dans le tube d'enroulement 4.

Avantageusement, le dispositif d'occultation 3 comprend, en outre, une barre de charge 8 pour exercer une tension sur l'écran 2.

Le store enroulable, qui forme le dispositif d'occultation 3, comporte la toile, formant l'écran 2 du dispositif d'occultation 3. Une première extrémité de l'écran 2, en particulier l'extrémité supérieure de l'écran 2, dans la configuration assemblée du dispositif d'occultation 3, est fixée au tube d'enroulement 4. En outre, une deuxième extrémité de l'écran 2, en particulier l'extrémité inférieure de l'écran 2, dans la configuration assemblée du dispositif d'occultation 3, est fixée à la barre de charge 8.

Dans un exemple de réalisation, non représenté, la première extrémité de l'écran 2 présente un ourlet au travers duquel est disposée une tige, en particulier en métal. Cet ourlet réalisé au niveau de la première extrémité de l'écran 2 est obtenu au moyen d'une couture de la toile formant l'écran 2. Lors de l'assemblage de l'écran 2 sur le tube d'enroulement 4, l'ourlet et la tige situés au niveau de la première extrémité de l'écran 2 sont insérés par coulissement dans une rainure ménagée sur la face externe du tube d'enroulement 4, en particulier sur toute la longueur du tube d'enroulement 4, de sorte à solidariser l'écran 2 avec le tube d'enroulement 4 et à pouvoir enrouler et dérouler l'écran 2 autour du tube d'enroulement 4.

La position enroulée correspond à une position de fin de course haute prédéterminée ou à la mise en appui de la barre de charge 8 de l'écran 2 contre un bord du caisson 9. En outre, la position déroulée correspond à une position de fin de course basse prédéterminée ou à la mise en appui de la barre de charge 8 de l'écran 2 contre un seuil 63, ou encore au déroulement complet de l'écran 2.

Avantageusement, la barre de charge 8 est configurée pour obturer la fente 62 du caisson 9, lorsque l'écran 2 est dans la position enroulée.

Avantageusement, le dispositif d'occultation 3 peut comprendre, en outre, deux coulisses latérales 10, comme illustré uniquement à la figure 2. En outre, chaque coulisse latérale 10 comprend une gorge 55. Chaque gorge 55 de l'une des coulisses latérales 10 coopère, autrement dit est configurée pour coopérer, avec un bord latéral 2a de l'écran 2, ainsi qu'avec une extrémité latérale de la barre de charge 8 fixée à la deuxième extrémité de l'écran 2, en particulier dans la configuration assemblée du dispositif d'occultation 3, de sorte à guider l'écran 2, lors de l'enroulement et du déroulement de l'écran 2 autour du tube d'enroulement 4.

Avantageusement, les coulisses latérales 10 s'étendent suivant une direction verticale, en particulier dans une configuration assemblée du dispositif d'occultation 3 dans l'installation 1. En outre, les coulisses latérales 10 s'étendent à partir du seuil 63 jusqu'au caisson 9.

Avantageusement, le caisson 9 et les coulisses latérales 10 forment un cadre à l'intérieur duquel l'écran 2 peut être déplacé. Ce cadre peut être fermé par une barre supplémentaire, non représentée, reliant les deux coulisses latérales 10 au niveau du seuil 63.

Avantageusement, l'écran 2 comprend une pluralité de lattes transversales 53.

Ainsi, les lattes transversales 53 permettent de garantir un maintien de l'écran 2 entre les deux coulisses latérales 10.

Ici, les lattes transversales 53 s'étendent entre les deux bords latéraux 2a de l'écran 2.

Dans un exemple de réalisation, chaque latte transversale 53 est disposée à l'intérieur d'une poche 61 ménagée dans l'écran 2. Chaque poche 61 réalisée dans l'écran 2 peut être obtenue au moyen de coutures de la toile formant l'écran 2. Lors de l'assemblage de l'écran 2, chaque latte transversale 53 est insérée par coulissement dans l'une des poches 61 ménagées dans l'écran 2.

Avantageusement, l'écran 2 comprend, au niveau de chacun de ses bords latéraux 2a, une pluralité d'éléments de retenue 54. Chaque élément de retenue 54 coopère, autrement dit est configuré pour coopérer, avec la gorge 55 de l'une des coulisses latérales 10, dans la configuration assemblée du dispositif d'occultation 3.

Ainsi, lors de l'enroulement ou du déroulement de l'écran 2, les éléments de retenue 54 disposés sur les bords latéraux 2a de l'écran 2 sont retenus dans les coulisses latérales 10, de sorte à garantir un guidage latéral de l'écran 2.

De cette manière, chaque gorge 55 ménagée dans l'une des coulisses latérales 10 permet d'empêcher le retrait d'un élément de retenue 54 disposé sur l'un des bords latéraux 2a de l'écran 2, lors du déplacement de l'écran 2 entre la position enroulée et la position déroulée.

Ici, chaque latte transversale 53 de l'écran 2 comprend un élément de retenue 54 à chacune de ses extrémités.

Avantageusement, les éléments de retenue 54 sont réalisés sous la forme de crochets en forme de T.

Avantageusement, la barre de charge 8 peut comprendre un élément de retenue 54 à chacune de ses extrémités latérales, de sorte à coopérer avec la gorge 55 de l'une des coulisses latérales 10, en particulier dans la configuration assemblée du dispositif d'occultation 3.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée, en liaison filaire ou non filaire, avec l'unité de commande centrale 13.

Avantageusement, l'unité de commande centrale 13 peut piloter l'unité de commande locale 12, ainsi que d'autres unités de commande locales similaires et réparties dans le bâtiment.

Le dispositif d'entraînement motorisé 5 est, de préférence, configuré pour exécuter les commandes d'enroulement et, éventuellement, de déroulement de l'écran 2 du dispositif d'occultation 3, pouvant être émises, notamment, par l'unité de commande locale 12 ou l'unité de commande centrale 13.

L'installation 1 comprend soit l'unité de commande locale 12, soit l'unité de commande centrale 13, soit l'unité de commande locale 12 et l'unité de commande centrale 13.

On décrit à présent, plus en détail et en référence aux figures 3 et 4, le dispositif d'entraînement motorisé 5, y compris l'actionneur électromécanique 11, appartenant à l'installation 1 et, plus particulièrement, au dispositif d'occultation 3 illustré aux figures 1 et 2.

L'actionneur électromécanique 11 comprend au moins un carter 17, en particulier tubulaire, un moteur électrique 16, un dispositif électromagnétique 32, en particulier de freinage, et un arbre de sortie 20.

Le moteur électrique 16 et le dispositif électromagnétique 32 sont montés à l'intérieur du carter 17 de l'actionneur électromécanique 11, en particulier dans une configuration assemblée de l'actionneur électromécanique 11.

Le moteur électrique 16 et le dispositif électromagnétique 32 sont représentés par leur enveloppe à la figure 3, sans détails sur leurs éléments constitutifs internes.

Comme visible à la figure 4, le moteur électrique 16 comprend un rotor 51 et un stator 52 positionnés de manière coaxiale autour de l'axe de rotation X, qui est également l'axe de rotation du tube d'enroulement 4 en configuration montée du dispositif d'entraînement motorisé 5.

Avantageusement, le rotor 51 comprend un arbre de rotation 66.

Ici, le moteur électrique 16 peut être de type asynchrone.

Des moyens de commande de l'actionneur électromécanique 11, permettant le déplacement de l'écran 2 du dispositif d'occultation 3, comprennent au moins une unité de contrôle 15. Cette unité de contrôle 15 est apte à mettre en fonctionnement le moteur électrique 16 de l'actionneur électromécanique 11, et, en particulier, permettre l'alimentation en énergie électrique du moteur électrique 16.

Ainsi, l'unité de contrôle 15 commande, notamment, le moteur électrique 16, de sorte à ouvrir ou, éventuellement, fermer l'écran 2, comme décrit précédemment.

Les moyens de commande de l'actionneur électromécanique 11 comprennent des moyens matériels et/ou logiciels.

A titre d'exemple nullement limitatif, les moyens matériels peuvent comprendre au moins un microcontrôleur, non représenté.

Avantageusement, l'unité de contrôle 15 comprend, en outre, un premier module de communication 27, en particulier de réception d'ordres de commande, les ordres de commande étant émis par un émetteur d'ordres, tel qu'un dispositif d'alarme incendie 14, l'unité de commande locale 12 ou l'unité de commande centrale 13, ces ordres étant destinés à commander le dispositif d'entraînement motorisé 5.

Avantageusement, le premier module de communication 27 de l'unité de contrôle 15 est de type filaire.

Le premier module de communication 27 peut également permettre la réception d'ordres de commande transmis par des moyens sans fil. En particulier, le premier module de communication 27 peut être configuré pour recevoir des ordres de commande radioélectriques.

Avantageusement, l'unité de contrôle 15, le dispositif d'alarme incendie 14, l'unité de commande locale 12 et/ou l'unité de commande centrale 13 peuvent être en communication avec un ou plusieurs capteurs, non représentés, notamment de température ou de fumée.

Avantageusement, l'unité de contrôle 15, le dispositif d'alarme incendie 14, l'unité de commande locale 12 et/ou l'unité de commande centrale 13 peuvent également être en communication avec un serveur 28, tel qu'illustré à la figure 2, de sorte à contrôler l'actionneur électromécanique 11 suivant des données mises à disposition à distance par l'intermédiaire d'un réseau de communication, en particulier un réseau internet pouvant être relié au serveur 28.

L'unité de contrôle 15 peut être commandée à partir de l'unité de commande locale 12 et/ou centrale 13. L'unité de commande locale 12 et/ou centrale 13 est pourvue d'un clavier de commande. Le clavier de commande de l'unité de commande locale 12 ou centrale 13 comprend un ou plusieurs éléments de sélection 33 et, éventuellement, un ou plusieurs éléments d'affichage 34.

A titre d'exemples nullement limitatifs, les éléments de sélection peuvent comprendre des boutons poussoirs et/ou des touches sensitives. Les éléments d'affichage peuvent comprendre des diodes électroluminescentes et/ou un afficheur LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

Avantageusement, le dispositif d'alarme incendie 14, l'unité de commande locale 12 et/ou l'unité de commande centrale 13 comprend au moins un deuxième module de communication 36.

Ainsi, le deuxième module de communication 36 du dispositif d'alarme incendie 14 ou de l'unité de commande locale 12 ou centrale 13 est configuré pour émettre, autrement dit émet, des ordres de commande, en particulier par des moyens filaires ou par des moyens sans fil, par exemple radioélectriques.

En outre, le deuxième module de communication 36 du dispositif d'alarme incendie 14 ou de l'unité de commande locale 12 ou centrale 13 peut également être configuré pour recevoir, autrement dit reçoit, des ordres de commande, en particulier par l'intermédiaire des mêmes moyens.

Avantageusement, le deuxième module de communication 36 du dispositif d'alarme incendie 14 ou de l'unité de commande locale 12 ou centrale 13 est configuré pour communiquer, autrement dit communique, avec le premier module de communication 27 de l'unité de contrôle 15.

Ainsi, le deuxième module de communication 36 du dispositif d'alarme incendie 14 ou de l'unité de commande locale 12 ou centrale 13 échange des ordres de commande avec le premier module de communication 27 de l'unité de contrôle 15, soit de manière monodirectionnelle, soit de manière bidirectionnelle.

Avantageusement, l'unité de commande locale 12 est un point de commande, pouvant être fixe ou nomade. Un point de commande fixe peut être un boîtier de commande destiné à être fixé sur une façade du mur M du bâtiment ou sur une face d'un cadre dormant d'une fenêtre ou d'une porte. Un point de commande nomade peut être une télécommande, un téléphone intelligent ou une tablette. Un tel point de commande nomade communique, préférentiellement, de façon non filaire avec l'unité de contrôle 15, mais peut également communiquer de manière filaire avec l'unité de contrôle 15.

Avantageusement, le dispositif d'alarme incendie 14, l'unité de commande locale 12 et/ou l'unité de commande centrale 13 comprend, en outre, un contrôleur 35.

Le dispositif d'entraînement motorisé 5, en particulier l'unité de contrôle 15, est, de préférence, configuré pour exécuter des ordres de commande de déplacement, notamment de fermeture ainsi que d'ouverture, de l'écran 2 du dispositif d'occultation 3. Ces ordres de commande peuvent être émis, notamment, par le dispositif d'alarme incendie 14, l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 33 de l'unité de commande locale 12 ou centrale 13.

Le dispositif d'entraînement motorisé 5 peut également être contrôlé automatiquement, par exemple par la réception d'un ordre de commande correspondant à au moins un signal provenant d'au moins un capteur, non représenté, et/ou à un signal provenant d'une horloge, non représentée, de l'unité de contrôle 15, en particulier du microcontrôleur. Le capteur et/ou l'horloge peuvent être intégrés au dispositif d'alarme incendie 14, à l'unité de commande locale 12 ou à l'unité de commande centrale 13.

Ici, le dispositif d'entraînement motorisé 5 et, plus particulièrement, l'actionneur électromécanique 11 comprend un câble d'alimentation électrique 18.

Avantageusement, l'unité de contrôle 15 peut être alimentée en énergie électrique au moyen du câble d'alimentation électrique 18, d'une part, connecté électriquement au réseau d'alimentation électrique du secteur et, d'autre part, connecté électriquement à une source d'alimentation en énergie électrique auxiliaire 23.

Ainsi, le câble d'alimentation électrique 18 permet une alimentation en énergie électrique à partir du réseau d'alimentation électrique du secteur et à partir de la source d'alimentation en énergie électrique auxiliaire 23.

Avantageusement, le câble d'alimentation électrique 18 est relié électriquement à un dispositif de connexion électrique 7, comme illustré à la figure 3.

Ici, l'actionneur électromécanique 11 comprend le dispositif de connexion électrique 7, en particulier un connecteur électrique.

Ici, le carter 17 est de forme cylindrique, notamment de révolution autour de l'axe de rotation X, et est ouvert à chacune de ses extrémités 17a, 17b.

Avantageusement, le carter 17 est un tube présentant une section circulaire. Dans un exemple de réalisation, le carter 17 est réalisé dans un matériau métallique.

La matière du carter de l'actionneur électromécanique n'est pas limitative et peut être différente. Il peut s'agir, en particulier, d'une matière plastique.

Avantageusement, l'actionneur électromécanique 11 comprend, en outre, un réducteur 19.

Avantageusement, le réducteur 19 comprend au moins un étage de réduction. L'étage de réduction peut être un train d'engrenages de type épicycloïdal.

Le type et le nombre d'étages de réduction du réducteur ne sont pas limitatifs.

Le réducteur 19 est représenté par son enveloppe à la figure 3, sans détails sur ses éléments constitutifs internes, qui sont connus en soi.

Ici, le réducteur 19 est monté à l'intérieur du carter 17 de l'actionneur électromécanique 11, en particulier dans la configuration assemblée de l'actionneur électromécanique 11.

Avantageusement, le réducteur 19 est de type réversible.

Avantageusement, le réducteur 19 est accouplé avec le rotor 51 du moteur électrique 16, en particulier dans la configuration assemblée de l'actionneur électromécanique 11.

Avantageusement, le réducteur 19 est conçu pour garantir une vitesse de déplacement de l'écran 2 adaptée lors du déroulement par gravité de l'écran 2, en particulier par le poids de l'écran 2 et, éventuellement, au moyen de la barre de charge 8, suite à une désactivation du dispositif électromagnétique 32.

Le tube d'enroulement 4 est entraîné en rotation autour de l'axe de rotation X et du carter 17 de l'actionneur électromécanique 11 en étant soutenu par l'intermédiaire de deux liaisons pivot.

La première liaison pivot est réalisée au niveau d'une première extrémité du tube d'enroulement 4 au moyen d'une couronne 22. La couronne 22 permet ainsi de réaliser un palier.

Avantageusement, la couronne 22 est insérée autour d'une première extrémité 17a du carter 17 de l'actionneur électromécanique 11.

La couronne 22 forme, autrement dit est configurée pour former ou constituer, un palier de guidage en rotation du tube d'enroulement 4, autour du carter 17 de l'actionneur électromécanique 11, en particulier dans une configuration assemblée du dispositif d'entraînement motorisé 5 et, par conséquent, du dispositif d'occultation 3.

Ici, l'actionneur électromécanique 11 comprend la couronne 22.

La deuxième liaison pivot, non représentée, est réalisée au niveau d'une deuxième extrémité du tube d'enroulement 4, opposée à sa première extrémité.

Avantageusement, l'actionneur électromécanique 11 comprend un support de couple 21, pouvant également être appelé « tête d'actionneur » ou « point fixe ».

Le support de couple 21 permet de reprendre les efforts exercés par l'actionneur électromécanique 11, en particulier le couple exercé par l'actionneur électromécanique 11, par rapport à la structure du bâtiment. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment.

Ainsi, le support de couple 21 de l'actionneur électromécanique 11 permet de fixer l'actionneur électromécanique 11 sur le dispositif de maintien 6, en particulier à l'un des supports 26 ou à l'une des parois latérales 9e, 9f du caisson 9.

Avantageusement, le support de couple 21 est en saillie au niveau de la première extrémité 17a du carter 17 de l'actionneur électromécanique 1.

Avantageusement, le support de couple 21 de l'actionneur électromécanique 11 peut également permettre d'obturer la première extrémité 17a du carter 17.

Par ailleurs, le support de couple 21 de l'actionneur électromécanique 11 peut permettre de supporter au moins une partie de l'unité de contrôle 15.

Avantageusement, le support de couple 21 est fixé au carter 17 au moyen d'un ou plusieurs éléments de fixation, non représentés, en particulier dans la configuration assemblée de l'actionneur électromécanique 11. Le ou les éléments de fixation peuvent être, notamment, des bossages, des vis de fixation, des éléments de fixation par encliquetage élastique, des rainures emmanchées dans des échancrures ou une combinaison de ces différents éléments de fixation.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Ici, une extrémité de l'arbre de sortie 20 est en saillie par rapport au carter 17 de l'actionneur électromécanique 11, en particulier par rapport à une deuxième extrémité 17b du carter 17 opposée à la première extrémité 17a.

Avantageusement, l'arbre de sortie 20 de l'actionneur électromécanique 11 est configuré pour entraîner en rotation un élément de liaison 24 relié au tube d'enroulement 4. L'élément de liaison 24 est réalisé sous la forme d'une roue.

Lors de la mise en fonctionnement de l'actionneur électromécanique 11, le moteur électrique 16 et le réducteur 19 entraînent en rotation l'arbre de sortie 20. En outre, l'arbre de sortie 20 entraîne en rotation le tube d'enroulement 4 par l'intermédiaire de l'élément de liaison 24.

Ainsi, le tube d'enroulement 4 entraîne en déplacement l'écran 2 du dispositif d'occultation 3.

Avantageusement et tel qu'illustré aux figures 3 et 4, le dispositif électromagnétique 32 est disposé d'un premier côté 16a du moteur électrique 16. En outre, le réducteur 19 est disposé d'un deuxième côté 16b du moteur électrique 16. Le premier côté 16a du moteur électrique 16 est opposé au deuxième côté 16b du moteur électrique 16, en particulier suivant la direction de l'axe de rotation X.

Ainsi, le dispositif électromagnétique 32 est accouplé avec une première extrémité 51a du rotor 51 du moteur électrique 16. En outre, le réducteur 19 est accouplé avec une deuxième extrémité 51b du rotor 51 du moteur électrique 16. La première extrémité 51a du rotor 51 est opposée à la deuxième extrémité 51b du rotor 51.

De cette manière, le rotor 51 est traversant par rapport au stator 52 du moteur électrique 16, autrement dit dépasse au niveau de chaque extrémité 52a, 52b du stator 52.

Avantageusement, le rotor 51, en particulier l'arbre de rotation 66, est supporté par deux paliers 67, en particulier dans la configuration assemblée de l'actionneur électromécanique 11. En outre, l'un des paliers 67 est disposé à chacune des première et deuxième extrémités 51a, 51b du rotor 51.

Ici, les paliers 67 sont des roulements, pouvant être, par exemple, à billes.

Ici, l'un des paliers 67 est assemblé dans le dispositif électromagnétique 32 et l'autre des paliers 67 est assemblé dans le réducteur 19, en particulier dans la configuration assemblée de l'actionneur électromécanique 11.

Ici, une première partie 15a de l'unité de contrôle 15 est disposée à l'intérieur du carter 17 de l'actionneur électromécanique 11 et une deuxième partie 15b de l'unité de contrôle 15 est disposée dans un coffret 25. Le coffret 25 est externe à l'actionneur électromécanique 11. Un tel coffret 25 peut être disposé à l'extérieur du caisson 9, comme illustré à la figure 2, ou à l'intérieur du caisson 9.

Dans un tel cas, la première partie 15a de l'unité de contrôle 15 peut être, par exemple, une cage mécanique de l'actionneur électromécanique 11, c'est-à-dire un dispositif de détection d'obstacle et/ou de fin course mécanique, et la deuxième partie 15b de l'unité de contrôle 15 peut être, par exemple, une armoire électrique.

En variante, non représentée, l'unité de contrôle 15 peut être réalisée en une seule partie et être disposée complètement à l'extérieur du carter 17, ou encore complètement à l'intérieur du carter 17.

Avantageusement, la source d'alimentation en énergie électrique auxiliaire 23 est disposée à l'intérieur du coffret 25.

Ici, l'actionneur électromécanique 11, en particulier l'unité de contrôle 15 et, plus particulièrement, la première partie 15a de l'unité de contrôle 15, comprend, en outre, un condensateur 65, comme illustré à la figure 4, de sorte à alimenter en énergie électrique le moteur électrique 16, notamment dans le cas où celui-ci est asynchrone.

Avantageusement, le dispositif d'entraînement motorisé 5 et, plus particulièrement, l'actionneur électromécanique 11 comprend un dispositif de comptage 29, telqu'illustré aux figures 3 et 4. Le dispositif de comptage 29 est configuré pour coopérer, autrement dit coopère, avec l'unité de contrôle 15 et, plus particulièrement, avec la première partie 15a de l'unité de contrôle 15. En outre, le dispositif de comptage 29 et l'unité de contrôle 15 sont configurés pour déterminer une position, pouvant être appelée « courante », de l'écran 2 et, plus particulièrement, de la barre de charge 8 par rapport au tube d'enroulement 4.

Avantageusement, l'unité de contrôle 15 est configurée pour surveiller au moins un signal P provenant du dispositif de comptage 29 à une fréquence f prédéterminée, notamment en fonction de la position de l'écran 2.

Ici, la couronne 22 comprend, sur sa face intérieure, une denture, non représentée, configurée pour coopérer, autrement dit coopérant, avec un pignon, non représenté, installé à l'intérieur du carter 17 de l'actionneur électromécanique 11.

Ainsi, la denture de la couronne 22 est configurée pour entraîner en rotation, autrement dit entraîne en rotation, le pignon, de sorte à compter le nombre de tours du tube d'enroulement 4, à déterminer le sens de rotation du tube d'enroulement 4 et/ou à gérer les positions de fin de course de l'écran 2.

Ici, la denture de la couronne 22 et le pignon forment le dispositif de comptage 29. En variante, non représentée, le dispositif de comptage 29 est de type magnétique.

Dans un tel cas, le dispositif de comptage 29 peut comprendre une roue codeuse et un ou plusieurs capteurs à effet Hall. La roue codeuse est reliée à une extrémité du rotor 51 du moteur électrique 16. En outre, le ou chaque capteur à effet Hall est assemblé sur une carte électronique de l'unité de contrôle 15.

Ainsi, le dispositif de comptage 29 permet de déterminer le nombre de tours réalisés par le rotor 51 du moteur électrique 16.

Dans une autre variante, non représentée, le dispositif de comptage 29 permet de déterminer le nombre de tours réalisés par l'arbre de sortie 20 de l'actionneur électromécanique 11.

Le type de dispositif de comptage n'est pas limitatif et peut être différent, en particulier de type optique, par exemple un encodeur équipé d'un ou plusieurs capteurs optiques.

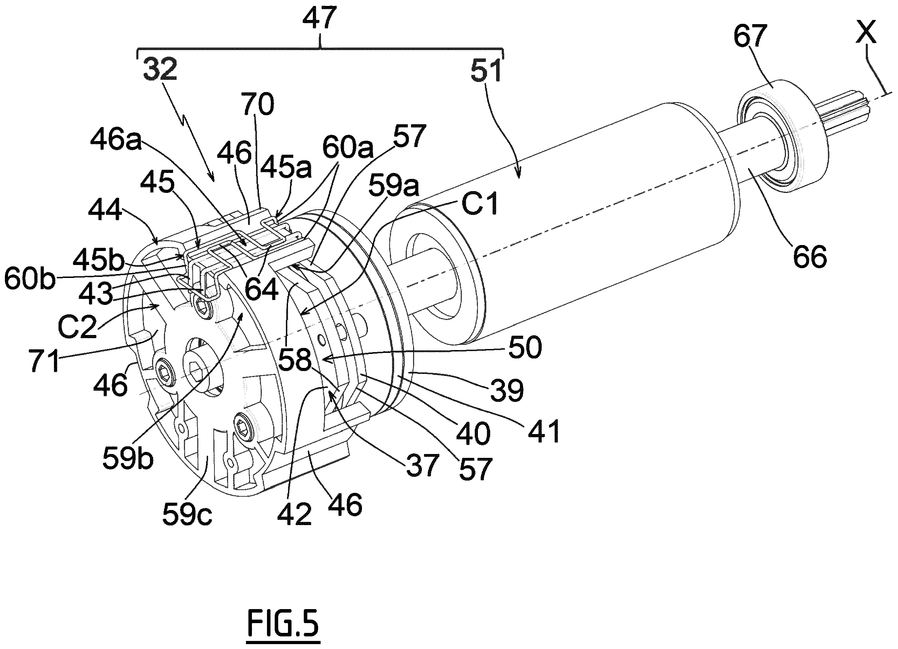

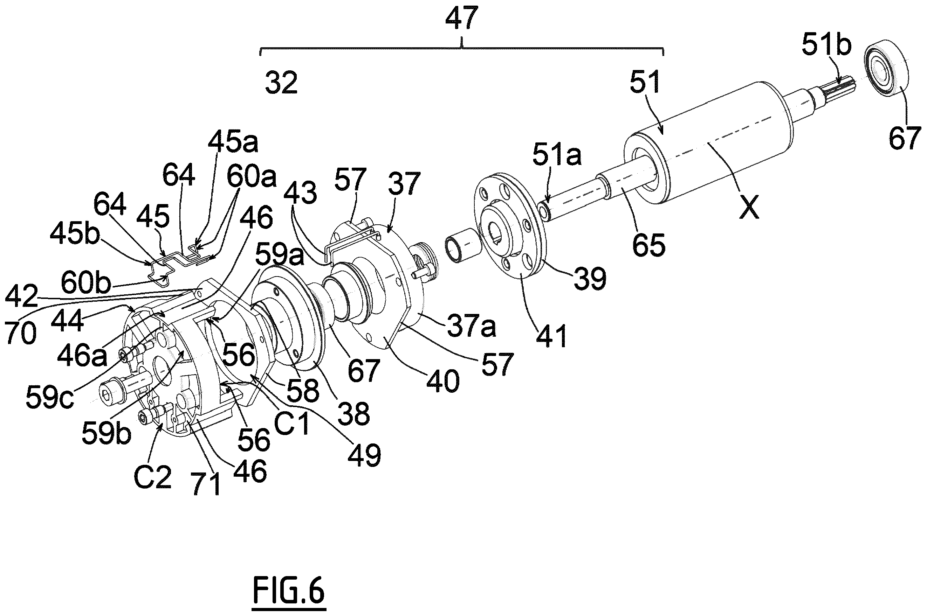

On décrit à présent, en référence aux figures 5 et 6, le dispositif électromagnétique 32 de l'actionneur électromécanique 11, qui est illustré aux figures 3 et 4 et conforme à un mode de réalisation de l'invention.

Ici, le dispositif électromagnétique 32 est un électrofrein.

Le dispositif électromagnétique 32 présente un premier état, dit de freinage, dans lequel l'arbre de sortie 20 de l'actionneur électromécanique 11 est bloqué en rotation par rapport au carter 17, au moyen du dispositif électromagnétique 32, et un deuxième état, dit de libération, dans lequel l'arbre de sortie 20 de l'actionneur électromécanique 11 est libre en rotation par rapport au carter 17.

Avantageusement, l'actionneur électromécanique 11, en particulier le moteur électrique 16, est alimenté en énergie électrique par un réseau d'alimentation électrique du secteur, en particulier par le réseau alternatif commercial.

La tension du réseau d'alimentation électrique ou tension secteur présente, par exemple, une valeur de 230 VRMS (valeur de crête de 325V) pour le réseau électrique français et une fréquence de 50 Hz.

La tension secteur peut présenter des valeurs différentes, en fonction du réseau électrique du pays dans lequel est montée l'installation 1.

Avantageusement, le dispositif électromagnétique 32 est connecté, autrement dit configuré pour être connecté, électriquement à la source d'alimentation en énergie électrique auxiliaire 23.

Avantageusement, le premier état du dispositif électromagnétique 32 est un état activé, dans lequel le dispositif électromagnétique 32 est alimenté en énergie électrique, en particulier à partir de la source d'alimentation en énergie électrique auxiliaire 23. En outre, le deuxième état du dispositif électromagnétique 32 est un état désactivé, dans lequel le dispositif électromagnétique 32 n'est pas alimenté en énergie électrique, en particulier à partir de la source d'alimentation en énergie électrique auxiliaire 23.

Ainsi, l'alimentation en énergie électrique du dispositif électromagnétique 32 par la source d'alimentation en énergie électrique auxiliaire 23 permet de maintenir en position l'arbre de sortie 20 de l'actionneur électromécanique 11 par rapport au carter 17, c'est-à-dire empêcher un entraînement en rotation de cet arbre de sortie 20 autour de l'axe de rotation X, qui peut résulter soit du poids de l'écran 2 et, éventuellement, du poids de la barre de charge 8, soit de l'activation du moteur électrique 16.

Avantageusement, la source d'alimentation en énergie électrique auxiliaire 23 est différente du réseau d'alimentation électrique du secteur.

Ainsi, le dispositif électromagnétique 32 est alimenté en énergie électrique de manière indépendante par rapport à l'alimentation en énergie électrique du moteur électrique 16.

En pratique, la source d'alimentation en énergie électrique auxiliaire 23 est au moins une batterie, pouvant être rechargeable.

Avantageusement, la tension de la source d'alimentation en énergie électrique auxiliaire 23 est une tension continue et présente, par exemple, une valeur de 24 V.

La tension de la source d'alimentation en énergie électrique auxiliaire n'est pas limitative et peut être différente.

Avantageusement, l'arbre de sortie 20 de l'actionneur électromécanique 11 est maintenu en position au moyen du dispositif électromagnétique 32, tant qu'aucun signal de commande S n'est reçu par l'unité de contrôle 15 pour désactiver le dispositif électromagnétique 32.

Ainsi, le dispositif électromagnétique 32 empêche le déroulement du tube d'enroulement 4 et, par conséquent, de l'écran 2, tant qu'aucun signal de commande S ne désactive le dispositif électromagnétique 32, de sorte à libérer l'arbre de sortie 20 de l'actionneur électromécanique 11.

De cette manière, le dispositif électromagnétique 32 est configuré pour retenir l'écran 2 dans la position enroulée ou dans une position remontée par rapport au dispositif de maintien 6 et, plus particulièrement, au caisson 9, tant qu'aucun signal de commande S n'est reçu par l'unité de contrôle 15, correspondant à une condition d'incendie. En outre, le dispositif électromagnétique 32 est configuré pour permettre le déroulement de l'écran 2 autour du tube d'enroulement 4 jusqu'à la position déroulée, dès qu'un signal de commande S est reçu par l'unité de contrôle 15, correspondant à une condition d'incendie.

Le déroulement de l'écran 2 autour du tube d'enroulement 4 jusqu'à la position déroulée est mis en oeuvre par gravité, en particulier au moyen de la barre de charge 8, suite à la coupure de l'alimentation électrique du dispositif électromagnétique 32, qui est, par conséquent, désactivé.

Avantageusement, le signal de commande S correspond à un signal de commande émis soit par le dispositif d'alarme incendie 14 soit par l'une des unités de commande 12, 13.

Ici, le dispositif d'alarme incendie 14 fait partie intégrante de l'installation 1.

Ainsi, le signal de commande S peut être émis soit automatiquement, par le dispositif d'alarme incendie 14 ou l'une des unités de commande 12, 13, soit manuellement, par l'une par des unités de commande 12, 13.

Avantageusement, lorsque le signal de commande S est émis, le dispositif électromagnétique 32 libère l'arbre de sortie 20 de l'actionneur électromécanique 11, de sorte que l'écran 2 atteigne la position déroulée par le déroulement de l'écran 2 par rapport au tube d'enroulement 4 par gravité.

Avantageusement, tant qu'aucune condition d'incendie n'est détectée par le dispositif d'alarme incendie 14, l'écran 2 est retenu dans la position enroulée au moyen du dispositif électromagnétique 32.

En outre, dès qu'une condition d'incendie est détectée par le dispositif d'alarme incendie 14, en particulier une détection de fumée et/ou de feu, le dispositif électromagnétique 32 est désactivé par une coupure ou une perte d'alimentation en énergie électrique, de sorte que l'écran 2 se déroule par rapport au tube d'enroulement 4 vers la position déroulée.

Ainsi, le déroulement de l'écran 2 en position déroulée permet de former une barrière contre la fumée et/ou le feu.

Avantageusement, la coupure ou la perte d'alimentation en énergie électrique du dispositif électromagnétique 32 peut intervenir dans un mode de test, de sorte à simuler une condition d'incendie, ou dans un mode de sécurité, dans le cas d'une détection d'incendie par le dispositif d'alarme incendie 14.

Avantageusement, suite à la restauration de l'alimentation en énergie électrique du dispositif électromagnétique 32 et, plus particulièrement, de l'actionneur électromécanique 11, le moteur électrique 16 de l'actionneur électromécanique 11 est mis en fonctionnement pour enrouler l'écran 2, en particulier jusqu'à la position enroulée, puis l'arbre de sortie 20 de l'actionneur électromécanique 11 est maintenu en position au moyen du dispositif électromagnétique 32, de sorte à retenir l'écran 2 en position enroulée.

Avantageusement, l'enroulement de l'écran 2, suite à la restauration de l'alimentation en énergie électrique, est mis en oeuvre soit automatiquement, en particulier par l'unité de contrôle 15, soit manuellement au moyen de l'une des unités de commande 12, 13.

Avantageusement, l'unité de contrôle 15 et, plus particulièrement, le microcontrôleur de l'unité de contrôle 15 comprend au moins une mémoire configurée pour mémoriser la position courante de l'écran 2 déterminée au moyen du dispositif de comptage 29.

Avantageusement, le dispositif électromagnétique 32 est activé, suite à son alimentation en énergie électrique par la source d'alimentation en énergie électrique auxiliaire 23, pour retenir l'écran 2 dans la position enroulée ou dans une position remontée par rapport au dispositif de maintien 6 et, plus particulièrement, au caisson 9, autrement dit tant qu'aucun signal de commande S n'est reçu par l'unité de contrôle 15 correspondant à une condition d'incendie. En outre, le dispositif électromagnétique 32 est désactivé, suite à une coupure d'alimentation en énergie électrique à partir de la source d'alimentation en énergie électrique auxiliaire 23, pour permettre le déroulement de l'écran 2 autour du tube d'enroulement 4 jusqu'à la position déroulée, autrement dit dès qu'un signal de commande S est reçu par l'unité de contrôle 15 correspondant à une condition d'incendie.

Avantageusement, l'unité de contrôle 15, en particulier la deuxième partie 15b de l'unité de contrôle 15, comprend au moins un premier élément de commande 30 de l'alimentation en énergie électrique du moteur électrique 16 à partir du réseau d'alimentation électrique du secteur et au moins un deuxième élément de commande 31 de l'alimentation en énergie électrique du dispositif électromagnétique 32 à partir de la source d'alimentation en énergie électrique auxiliaire 23, comme illustré à la figure 2.

Avantageusement, les premier et deuxième éléments de commande 30, 31 de l'unité de contrôle 15 peuvent être des interrupteurs.

Lorsque le moteur électrique 16 est alimenté en énergie électrique, en particulier lors de l'enroulement de l'écran 2, à partir du réseau d'alimentation électrique du secteur, le dispositif électromagnétique 32 est désactivé, autrement dit non-alimenté en énergie électrique à partir de la source d'alimentation en énergie électrique auxiliaire 23. L'alimentation en énergie électrique du moteur électrique 16 est mise en oeuvre par l'intermédiaire du premier élément de commande 30. En outre, la désactivation du dispositif électromagnétique 32 est mise en oeuvre au moyen du deuxième élément de commande 31.

Par ailleurs, lorsque le moteur électrique 16 est non-alimenté en énergie électrique, à partir du réseau d'alimentation électrique du secteur, le dispositif électromagnétique 32 est soit activé, en particulier lors du maintien en position de l'écran 2 en position enroulée, autrement dit alimenté en énergie électrique à partir de la source d'alimentation en énergie électrique auxiliaire 23, soit désactivé, en particulier lorsqu'une condition d'incendie est déterminée pour permettre le déroulement de l'écran 2 par gravité, autrement dit non-alimenté en énergie électrique à partir de la source d'alimentation en énergie électrique auxiliaire 23. La non-alimentation en énergie électrique du moteur électrique 16 est mise en oeuvre par l'intermédiaire du premier élément de commande 30. En outre, l'activation ou la désactivation du dispositif électromagnétique 32 est mise en oeuvre, par l'intermédiaire du deuxième élément de commande 31.

Le dispositif électromagnétique 32 comprend un boîtier 44.

Ici, le boîtier 44 est réalisé dans une matière métallique, pouvant être, par exemple, du zamak (marque déposée - acronyme du terme allemand « Zink, Aluminium, MAgnesium et Kupfer »), autrement dit un alliage de zinc, d'aluminium, de magnésium et de cuivre.

Le carter 17 comprend une surface interne 17c.

Ici, le boîtier 44 est en contact avec la surface interne 17c du carter 17, en particulier dans la configuration assemblée de l'actionneur électromécanique 11.

Ainsi, le boîtier 44 est maintenu à l'intérieur du carter 17.

En outre, le boîtier 44 est fixé, autrement est configuré pour être fixé, au carter 17 au moyen d'un élément de fixation 68, en particulier dans la configuration assemblée de l'actionneur électromécanique 11.

Ici, l'élément de fixation 68 est une goupille. En outre, cet élément de fixation 68 traverse un trou, non visible à la figure 4, ménagé dans le carter 17 et est disposé dans une ouverture 69 ménagée dans le boîtier 44.

Avantageusement, le dispositif électromagnétique 32 comprend, en outre, au moins un électroaimant 37, une culasse 38, une mâchoire 39 et un plateau 40. L'électroaimant 31 comprend un corps 37a et une bobine, non représentée. Le corps 37a de l'électroaimant 37 est disposé en vis-à-vis de la culasse 38, en particulier dans une configuration assemblée du dispositif électromagnétique 32. Le plateau 40 est disposé en vis-à-vis de la mâchoire 39, en particulier dans la configuration assemblée du dispositif électromagnétique 32.

Ici, le plateau 40 est solidaire de l'électroaimant 37, en particulier du corps 37a de l'électroaimant 37.

Avantageusement, la bobine est disposée à l'intérieur d'un logement, non représenté, du corps 37a de l'électroaimant 37.

Avantageusement, l'électroaimant 37 est configuré pour générer un champ magnétique, lorsque le dispositif électromagnétique 32 est alimenté en énergie électrique par la source d'alimentation en énergie électrique auxiliaire 23.

Avantageusement, le corps 37a de l'électroaimant 37 et la culasse 38 sont réalisés dans un matériau magnétique, notamment métallique, tel que par exemple un acier.

En variante, non représentée, la culasse 38 présente uniquement une partie magnétique. En outre, la partie magnétique de la culasse 38 est disposée en vis-à-vis du corps 37a de l'électroaimant 37, en particulier dans la configuration assemblée du dispositif électromagnétique 32.

Avantageusement, le dispositif électromagnétique 32 comprend, en outre, au moins une garniture de friction 41. La garniture de friction 41 est disposée entre la mâchoire 39 et le plateau 40, en particulier dans la configuration assemblée du dispositif électromagnétique 32.

Avantageusement, la garniture de friction 41 est réalisée sous la forme d'un anneau de friction.

Ici, la garniture de friction 41 est réalisée dans une matière métallique.

Avantageusement, l'électroaimant 37, la culasse 38, la mâchoire 39, le plateau 40 et la garniture de friction 41 sont alignés suivant un même axe, en particulier l'axe de rotation X.

L'axe de chacun des organes 37, 38, 39, 40, 41 du dispositif électromagnétique 32 n'est pas représenté sur les figures 4 à 6, de sorte à simplifier la lecture de celles-ci. Ces axes sont superposés à l'axe de rotation X en configuration montée de l'actionneur électromécanique 11.

Le dispositif électromagnétique 32 est relié électriquement au dispositif de connexion électrique 7 au moyen de fils électriques 43.

Ici et comme illustré aux figures 5 et 6, le nombre de fils électriques 43 est de deux.

Ainsi, une liaison électrique est mise en oeuvre par l'intermédiaire des fils électriques 43, de sorte à relier électriquement le dispositif électromagnétique 32, en particulier l'électroaimant 37 et, plus particulièrement sa bobine, à l'unité de contrôle 15, en particulier à la deuxième partie 15b de l'unité de contrôle 15 et, plus particulièrement, au deuxième élément de commande 31.

De cette manière, les fils électriques 43 sont configurés pour alimenter en énergie électrique le dispositif électromagnétique 32 à partir de la source d'alimentation en énergie électrique auxiliaire 23, par l'intermédiaire du dispositif de connexion électrique 7 et du câble d'alimentation électrique 18.

Avantageusement, le passage de l'état désactivé à l'état activé du dispositif électromagnétique 32, et inversement, est généré par l'électroaimant 37.

Ainsi, le passage de l'état désactivé à l'état activé du dispositif électromagnétique 32 est généré par une alimentation en énergie électrique de l'électroaimant 37, à partir de la source d'alimentation en énergie électrique auxiliaire 23. En outre, le passage de l'état activé à l'état désactivé du dispositif électromagnétique 32 est généré par une coupure de l'alimentation en énergie électrique de l'électroaimant 37, à partir de la source d'alimentation en énergie électrique auxiliaire 23.

Ici, le dispositif électromagnétique 32 et le rotor 51 forment un ensemble 47. En outre, le boîtier 44 du dispositif électromagnétique 32 forme un palier.

Ainsi, le dispositif électromagnétique 32 et le rotor 51 sont solidaires l'un de l'autre, autrement dit le dispositif électromagnétique 32 est accouplé avec le rotor 51.

De cette manière, lors d'une insertion du dispositif électromagnétique 32 à l'intérieur du carter 17, au cours de l'assemblage de l'actionneur électromécanique 11, le rotor 51 est logé à l'intérieur d'un évidement central 48 du stator 52, tout en étant maintenu par le dispositif électromagnétique 32 prenant appui sur la surface interne 17c du carter 17.

Avantageusement, le dispositif électromagnétique 32 comprend, en outre, un élément élastique, tel qu'un ressort, non représenté. L'élément élastique est disposé entre la mâchoire 39 et la garniture de friction 41.

Ainsi, l'élément élastique permet de libérer la garniture de friction 41 par rapport à la mâchoire 39, lors du passage de l'état activé à l'état désactivé du dispositif électromagnétique 32, autrement dit lors de la coupure de l'alimentation en énergie électrique du dispositif électromagnétique 32 à partir de la source d'alimentation en énergie électrique auxiliaire 23.

Ici, l'élément élastique est réalisé sous la forme d'une rondelle ressort, en particulier de forme ondulée.

Avantageusement, le boîtier 44 comprend un logement 50 à l'intérieur duquel sont logés, au moins l'un des organes suivants, l'électroaimant 37, la culasse 38, la mâchoire 39, le plateau 40 et la garniture de friction 41.

Avantageusement, le dispositif électromagnétique 32 comprend, en outre, une pièce de serrage 42. En outre, la pièce de serrage 42 est configurée pour monter la culasse 38 à l'intérieur du logement 50 du boîtier 44, en particulier dans la configuration assemblée du dispositif électromagnétique 32.

Ici, la pièce de serrage 42 comprend une ouverture 49. En outre, la culasse 38, en particulier une surface extérieure de celle-ci pouvant être, par exemple, de section circulaire, est insérée dans l'ouverture 49 de la pièce de serrage 42, en particulier avec un ajustement serré.

Avantageusement, le boîtier 44, en particulier le logement 50 du boîtier 44, comprend une pluralité de méplats 56. Sur son côté interne tourné vers l'axe de rotation X en configuration montée de l'actionneur électromécanique 11, chaque méplat 56 du boîtier 44 coopère, autrement dit est configuré pour coopérer, avec un méplat 57, 58 du plateau 40 et de la pièce de serrage 42, en particulier dans la configuration assemblée du dispositif électromagnétique 32.

Ainsi, une liaison glissière réalisée, d'une part, entre le boîtier 44 et l'électroaimant 37 et, d'autre part, entre le boîtier 44 et la culasse 38 est mise en oeuvre au moyen des méplats 56 du boîtier 44 et des méplats 57, 58 du plateau 40 et de la pièce de serrage 42.

Avantageusement, une section du logement 50 du boîtier 44, perpendiculaire à l'axe de rotation X, présente une forme générale triangulaire. En outre, la forme générale triangulaire de la section du logement 50 du boîtier 44 coopère, autrement dit est configurée pour coopérer, avec le plateau 40 et la pièce de serrage 42, en particulier dans la configuration assemblée du dispositif électromagnétique 32.

Ici, la forme générale triangulaire de la section du logement 50 du boîtier 44 est réalisée par l'intermédiaire des méplats 56.

L'actionneur électromécanique 11 comprend, en outre, une agrafe 45.

Le boîtier 44 comprend au moins une gorge 46.

L'agrafe 45 est montée, autrement dit est configurée pour être montée, sur le boîtier 44 et est logée, autrement dit est configurée pour être logée, au moins en partie dans la gorge 46 du boîtier 44, en particulier dans la configuration assemblée de l'actionneur électromécanique 11.

En outre, les fils électriques 43 sont maintenus en position, autrement dit sont configurés pour être maintenus en position, dans la gorge 46 du boîtier 44 au moyen de l'agrafe 45, en particulier dans la configuration assemblée de l'actionneur électromécanique 11.

Ainsi, l'agrafe 45 permet de maintenir en position les fils électriques 43 d'alimentation en énergie électrique du dispositif électromagnétique 32 à l'intérieur de la gorge 46 du boîtier 44, d'une part, lors de l'insertion du dispositif électromagnétique 32 à l'intérieur du carter 17 et, d'autre part, pendant toute la durée de vie de l'actionneur électromécanique 11.

De cette manière, le maintien en position des fils électriques 43 d'alimentation en énergie électrique du dispositif électromagnétique 32 par l'agrafe 45 permet d'éviter d'endommager, voire de sectionner, ces fils électriques 43, lors de l'insertion du dispositif électromagnétique 32 à l'intérieur du carter 17.

Par conséquent, le maintien en position des fils électriques 43 d'alimentation en énergie électrique du dispositif électromagnétique 32 par l'agrafe 45 permet de garantir la fiabilité de fonctionnement de l'actionneur électromécanique 11, notamment en évitant que le tube d'enroulement 4 soit entraîné en rotation par le poids de l'écran 2 ou de la barre de charge 8 à cause d'un défaut d'alimentation électrique du dispositif électromagnétique 32.

En outre, l'agrafe 45 permet de garantir que le maintien en position des fils électriques 43 d'alimentation en énergie électrique du dispositif électromagnétique 32 à l'intérieur de la gorge 46 du boîtier 44 ne se détériorera pas, en particulier par rapport à un élément de maintien temporaire réalisé au moyen d'un adhésif pouvant se décoller, soit lors de l'insertion du dispositif électromagnétique 32 à l'intérieur du carter 17 soit au cours de la durée de vie de l'actionneur électromécanique 11.

Par ailleurs, le maintien en position des fils électriques 43 d'alimentation en énergie électrique du dispositif électromagnétique 32 par l'agrafe 45 permet de faciliter l'assemblage de l'actionneur électromécanique 11, notamment lors de l'insertion du dispositif électromagnétique 32 à l'intérieur du carter 17.

Par conséquent, l'assemblage de l'actionneur électromécanique 11 ne nécessite pas une dextérité particulière de la part d'un opérateur de production, notamment dans le cas où l'insertion du dispositif électromagnétique 32 à l'intérieur du carter 17 est mise en oeuvre manuellement.

Ici, le boîtier 44 comprend une pluralité de gorges 46, en particulier trois.

Le nombre de gorges du boîtier n'est pas limitatif et peut être différent. Il peut être d'une seule, de deux ou supérieur et à égal à quatre.

Avantageusement, l'agrafe 45 est mise en place dans l'une des gorges 46 du boîtier 44 en fonction de la position des fils électriques 43 par rapport au dispositif électromagnétique 32 et, plus particulièrement, par rapport à l'électroaimant 37.

Avantageusement, la gorge 46 du boîtier 44 présente une surface extérieure 46a. En outre, les fils électriques 43 sont maintenus en position, autrement dit sont configurés pour être maintenus en position, entre la surface extérieure 46a de la gorge 46 du boîtier 44 et l'agrafe 45, en particulier dans la configuration assemblée de l'actionneur électromécanique 11.

Ici, l'agrafe 45 est un élément de maintien, autrement dit est une pièce de maintien, par pincement ou par coincement des fils électriques 43 à l'intérieur de la gorge 46 du boîtier 44, en particulier contre la surface extérieure 46a de la gorge 46 du boîtier 44.

Avantageusement, l'agrafe 45 est disposée, autrement dit est configurée pour être disposée, au moins en partie entre la surface extérieure 46a de la gorge 46 du boîtier 44 et la surface interne 17c du carter 17, en particulier dans la configuration assemblée de l'actionneur électromécanique 11 et selon une direction radiale par rapport à l'axe de rotation X.

Avantageusement, le boîtier 44 comprend, en outre, une première niche 59a, autrement dit un premier logement en creux ou une première cavité, et une deuxième niche 59b, autrement dit un deuxième logement en creux ou une deuxième cavité.

Ici, la première niche 59a est ménagée sous le côté interne d'une partie en saillie 70 du boîtier 44. En outre, la deuxième niche 59b est ménagée dans une paroi 71 du boîtier 44 visible aux figures 5 et 6, qui est orthogonale à l'axe de rotation X. Par ailleurs, la deuxième niche 59b est interrompue localement par des nervures 59c ménagée dans la paroi 71 du boîtier 44.

Ici, la partie en saillie 70 du boîtier 44 prolonge la gorge 46 dans laquelle est installée l'agrafe 45.

L'agrafe 45 comprend au moins un premier élément de fixation 60a et au moins un deuxième élément de fixation 60b. En outre, le premier élément de fixation 60a de l'agrafe 45 est logé, autrement dit est configuré pour être logé, à l'intérieur de la première niche 59a du boîtier 44 et le deuxième élément de fixation 60b de l'agrafe 45 est logé, autrement dit est configuré pour être logé, à l'intérieur de la deuxième niche 59b du boîtier 44, en particulier dans la configuration assemblée de l'actionneur électromécanique 11.

Avantageusement, l'agrafe 45 est réalisée au moyen d'un fil métallique plié, en particulier élastiquement déformable.

Ici, le fil métallique plié formant l'agrafe 45 est défini par plusieurs sections.

En variante, non représentée, le fil métallique plié formant l'agrafe 45 peut être défini par plusieurs brins.

On note A45 un axe longitudinal de l'agrafe 45, qui est parallèle à sa longueur et, dans le cas présent, parallèle à l'axe de rotation X en configuration assemblée de l'actionneur électromécanique 11.

Avantageusement, le premier élément de fixation 60a de l'agrafe 45 est réalisé par deux crochets 60a1, 60a2 formés à partir du fil métallique plié, en particulier par les deux extrémités du brin formant le fil métallique, qui sont, notamment, parallèles à l'axe longitudinal A45. En outre, le deuxième élément de fixation 60b de l'agrafe 45 comprend au moins une partie courbée 60b1, 60b2 du fil métallique plié.

Ici, dans la configuration assemblée de l'actionneur électromécanique 11, les crochets 60a1, 60a2 sont engagés, sous le côté interne de la partie en saillie 70 du boîtier 44, dans la première niche 59a.

Ici, le deuxième élément de fixation 60b de l'agrafe 45 comprend une première et une deuxième parties courbées 60b1, 60b2, en particulier en forme de « Z », et qui sont reliées entre elles par une troisième partie 60b3, qui est, dans le cas présent, orthogonale à l'axe longitudinal A45. Dans la configuration assemblée de l'actionneur électromécanique 11, les première et deuxième parties courbées 60b1, 60b2 sont engagées en partie dans la deuxième niche 59b.

Le nombre de parties courbées appartenant au deuxième élément de fixation de l'agrafe n'est pas limitatif et peut être différent. Il peut être d'un seul ou supérieur et à égal à trois.

L'assemblage de l'agrafe 45 sur le boîtier 44 peut ainsi être mis en oeuvre par encliquetage élastique, au moyen des premier et deuxième éléments de fixation 60a, 60b.

Lors de l'assemblage de l'agrafe 45 sur le boîtier 44, le premier élément de fixation 60a de l'agrafe 45 est introduit dans la première niche 59a du boîtier 44 puis le deuxième élément de fixation 60b de l'agrafe 45 est introduit dans la deuxième niche 59b du boîtier 44, en particulier par un mouvement de levier.

De cette manière, l'insertion du premier élément de fixation 60a de l'agrafe 45 dans la première niche 59a du boîtier 44 crée une liaison pivot et le deuxième élément de fixation 60b forme une poignée. Ceci permet de positionner et de maintenir l'agrafe 45 par rapport à la surface extérieure 46a de la gorge 46 du boîtier 44, tout en maintenant les fils électriques 43 par pincement entre l'agrafe 45 et la surface extérieure 46a de la gorge 46 du boîtier 44.

Avantageusement, la première niche 59a du boîtier 44 est ménagée sur un premier côté C1 du boîtier 44 et la deuxième niche 59b du boîtier 44 est ménagée sur un deuxième côté C2 du boîtier 44, le deuxième côté C2 du boîtier 44 étant opposé au premier côté C1 du boîtier 44, en particulier selon la direction de l'axe de rotation X. En outre, le premier élément de fixation 60a de l'agrafe 45 est disposé au niveau d'une première extrémité 45a de l'agrafe 45 et le deuxième élément de fixation 60b de l'agrafe 45 est disposé au niveau d'une deuxième extrémité 45b de l'agrafe 45, la deuxième extrémité 45b de l'agrafe 45 étant opposée à la première extrémité 45a de l'agrafe 45, en particulier selon l'axe longitudinal A45, donc selon la direction de l'axe de rotation X dans la configuration assemblée de l'actionneur électromécanique 11.

Ici, l'agrafe 45 est un élément de maintien, autrement dit une pièce de maintien ou une attache, replié à chacune de ses première et deuxième extrémités 45a, 45b, chacune des première et deuxième extrémités 45a, 45b de l'agrafe 45 coopérant, autrement dit étant configurée pour coopérer, avec l'un des premier et deuxième côtés C1, C2 du boîtier 44, en particulier avec l'une des première et deuxième niches 59a, 59b du boîtier 44.

Avantageusement, la matière métallique de l'agrafe 45 est de l'acier inoxydable.

Une telle matière utilisée pour réaliser l'agrafe 45 permet de garantir que celle-ci ne s'altère pas au cours du temps et qu'elle ne peut pas rouiller.

Avantageusement, l'agrafe 45 comprend, en outre, plusieurs parties cintrées 64. En outre, les fils électriques 43 sont maintenus en position, autrement dit sont configurés pour être maintenus en position, dans la gorge 46 du boîtier 44 au moyen des parties cintrées 64 de l'agrafe 45, en particulier dans la configuration assemblée de l'actionneur électromécanique 11.

Ainsi, les fils électriques 43 sont maintenus en position, autrement dit sont configurés pour être maintenus en position, entre la surface extérieure 46a de la gorge 46 du boîtier 44 et les parties cintrées 64 de l'agrafe 45, en particulier dans la configuration assemblée de l'actionneur électromécanique 11.

De cette manière, les parties cintrées 64 de l'agrafe 45 recouvrent, autrement dit sont configurées pour recouvrir, les fils électriques 43.

Ici, ces parties cintrées 64 s'étendent entre deux sections 45c, 45d de l'agrafe 45, qui définissent des côtés longitudinaux de l'agrafe 45 et qui sont parallèles à l'axe longitudinal A45.

Ici, les parties cintrées 64 de l'agrafe 45 sont réalisés sous la forme de créneaux au nombre de deux.

Le nombre et la forme des parties cintrées de l'agrafe ne sont pas limitatifs et peuvent être différents. Ils peuvent être, par exemple, d'un seul ou supérieur ou égal à trois et ils peuvent avoir, par exemple, une forme d'escargot ou une forme triangulaire.

Avantageusement, chaque partie cintrée 64 de l'agrafe 45 est disposé entre le premier élément de fixation 60a et le deuxième élément de fixation 60b, autrement dit entre la première extrémité 45a et la deuxième extrémité 45b de l'agrafe 45.

Grâce à la présente invention, l'agrafe permet de maintenir en position les fils électriques d'alimentation en énergie électrique du dispositif électromagnétique à l'intérieur de la gorge du boîtier du dispositif électromagnétique, d'une part, lors de l'insertion du dispositif électromagnétique à l'intérieur du carter et, d'autre part, pendant toute la durée de vie de l'actionneur électromécanique.

Bien entendu, de nombreuses modifications peuvent être apportées aux exemples de réalisation décrits précédemment sans sortir du cadre de l'invention défini par les revendications.

En variante, non représentée, l'agrafe 45 est réalisée au moyen d'une pièce en matière plastique, en particulier élastiquement déformable.

En variante, non représentée, le boîtier 44 est réalisé au moyen d'une pièce en matière plastique.

En variante, le moteur électrique 16 peut être de type sans balais à commutation électronique, appelé également « BLDC » (acronyme du terme anglo-saxon BrushLess Direct Current) ou « synchrone à aimants permanents », ou de type à courant continu.

En variante, non représentée, l'écran 2 comporte un tablier comprenant des lames horizontales articulées les unes aux autres. Ces lames peuvent être jointives lorsque le l'écran 2 atteint sa position basse déroulée. En outre, les lames de l'écran 2 peuvent être réalisées dans une matière métallique, pouvant être, par exemple de l'aluminium. La matière des lames n'est pas limitative et peut être différente. Il peut s'agir, notamment, d'une matière plastique. Par ailleurs, les lames de l'écran 2 peuvent être pourvues d'un isolant thermique, pouvant être disposé, notamment, à l'intérieur de celles-ci.

En variante, la garniture de friction 41 est une garniture souple. Dans ce cas, la garniture de friction 41 peut présenter une dureté comprise dans une plage pouvant s'étendre entre 50 et 100 Shore D. Avantageusement, la garniture de friction 41 peut être réalisée en silicone. La matière de la garniture de friction n'est pas limitative et peut être différente. Il peut s'agir, notamment, d'une matière composée à partir de liège.

En outre, les modes de réalisation et variantes envisagés peuvent être combinés pour générer de nouveaux modes de réalisation de l'invention, sans sortir du cadre de l'invention défini par les revendications.

## Revendications

1. Actionneur électromécanique (11) pour un dispositif d'occultation (3),
l'actionneur électromécanique (11) comprenant au moins :
- un carter (17),
- un moteur électrique (16),
- un dispositif électromagnétique (32),
- un arbre de sortie (20), et
- un dispositif de connexion électrique (7),
le moteur électrique (16) et le dispositif électromagnétique (32) étant montés à l'intérieur du carter (17),
le dispositif électromagnétique (32) présentant un premier état, dans lequel le dispositif électromagnétique (32) bloque l'arbre de sortie (20) de l'actionneur électromécanique (11) en rotation par rapport au carter (17), et un deuxième état, dans lequel l'arbre de sortie (20) de l'actionneur électromécanique (11) est libre en rotation par rapport au carter (17),
le dispositif électromagnétique (32) étant relié au dispositif de connexion électrique (7) au moyen de fils électriques (43), et
le dispositif électromagnétique (32) comprenant au moins un boîtier (44), **caractérisé**
**en ce que** l'actionneur électromécanique (11) comprend, en outre, une agrafe (45), en ce que le boîtier (44) comprend au moins une gorge (46),
**en ce que** l'agrafe (45) est montée sur le boîtier (44) et est logée au moins en partie dans la gorge (46) du boîtier (44),
et **en ce que** les fils électriques (43) sont maintenus en position dans la gorge (46) du boîtier (44) au moyen de l'agrafe (45).

2. Actionneur électromécanique (11) pour un dispositif d'occultation (3) selon la revendication 1, **caractérisé**
**en ce que** la gorge (46) du boîtier (44) présente une surface extérieure (46a),
et **en ce que** les fils électriques (43) sont maintenus en position entre la surface extérieure (46a) de la gorge (46) du boîtier (44) et l'agrafe (45).

3. Actionneur électromécanique (11) pour un dispositif d'occultation (3) selon la revendication 2, **caractérisé**
**en ce que** le carter (17) comprend au moins une surface interne (17c),
et **en ce que** l'agrafe (45) est disposée au moins en partie entre la surface extérieure (46a) de la gorge (46) du boîtier (44) et la surface interne (17c) du carter (17).

4. Actionneur électromécanique (11) pour un dispositif d'occultation (3) selon l'une quelconque des revendications 1 à 3, **caractérisé**
**en ce que** le boîtier (44) comprend, en outre, une première niche (59a) et une deuxième niche (59b),
**en ce que** l'agrafe (45) comprend au moins un premier élément de fixation (60a) et au moins un deuxième élément de fixation (60b),
et **en ce que** le premier élément de fixation (60a) de l'agrafe (45) est logé à l'intérieur de la premier niche (59a) du boîtier (44) et le deuxième élément de fixation (60b) de l'agrafe (45) est logé à l'intérieur de la deuxième niche (59b) du boîtier (44).

5. Actionneur électromécanique (11) pour un dispositif d'occultation (3) selon la revendication 4, **caractérisé**
**en ce que** la première niche (59a) du boîtier (44) est ménagée sur un premier côté (C1) du boîtier (44) et la deuxième niche (59b) du boîtier (44) est ménagée sur un deuxième côté (C2) du boîtier (44), le deuxième côté (C2) du boîtier (44) étant opposé au premier côté (C1) du boîtier (44),
et **en ce que** le premier élément de fixation (60a) de l'agrafe (45) est disposé au niveau d'une première extrémité (45a) de l'agrafe (45) et le deuxième élément de fixation (60b) de l'agrafe (45) est disposé au niveau d'une deuxième extrémité (45b) de l'agrafe (45), la deuxième extrémité (45b) de l'agrafe (45) étant opposée à la première extrémité (45a) de l'agrafe (45).

6. Actionneur électromécanique (11) pour un dispositif d'occultation (3) selon l'une quelconque des revendications 1 à 5, **caractérisé en ce que** l'agrafe (45) est réalisée au moyen d'un fil métallique plié.

7. Actionneur électromécanique (11) pour un dispositif d'occultation (3) selon la revendication 4 ou 5 et selon la revendication 6, **caractérisé**
**en ce que** le premier élément de fixation (60a) de l'agrafe (45) est réalisé par deux crochets (60a1, 60a2) formés à partir du fil métallique plié,
et **en ce que** le deuxième élément de fixation (60b) de l'agrafe (45) comprend au moins une partie courbée (60b1, 60b2) du fil métallique plié.

8. Actionneur électromécanique (11) pour un dispositif d'occultation (3) selon la revendication 6 ou selon la revendication 7, **caractérisé**
**en ce que** l'agrafe (45) comprend, en outre, plusieurs parties cintrées (64),
et **en ce que** les fils électriques (43) sont maintenus en position dans la gorge (46) du boîtier (44) au moyen des parties cintrées (64) de l'agrafe (45).

9. Actionneur électromécanique (11) pour un dispositif d'occultation (3) selon l'une quelconque des revendications 1 à 8, **caractérisé**
**en ce que** le moteur électrique (16) comprend au moins un rotor (51) et un stator (52), et en ce que le dispositif électromagnétique (32) est accouplé avec le rotor (51) du moteur électrique (16).

10. Dispositif d'occultation (3) comprenant un actionneur électromécanique (11) et un écran (2) enroulable sur un tube d'enroulement (4) entraîné en rotation par l'actionneur électromécanique (11), dans lequel l'actionneur électromécanique (11) est conforme à l'une quelconque des revendications 1 à 9.

11. Dispositif d'occultation (3) selon la revendication 10, **caractérisé en ce que** le dispositif d'occultation (3) est un dispositif de protection contre un incendie.

## Patentansprüche

1. Elektromechanischer Aktuator (11) für eine Abdeckvorrichtung (3), wobei der elektromechanische Aktuator (11) mindestens umfasst:
- ein Gehäuse (17),
- einen Elektromotor (16),
- eine elektromagnetische Vorrichtung (32),
- eine Ausgangswelle (20) und
- eine elektrische Verbindungsvorrichtung (7),
wobei der Elektromotor (16) und die elektromagnetische Vorrichtung (32) innerhalb des Gehäuses (17) angebracht sind,
wobei die elektromagnetische Vorrichtung (32) einen ersten Zustand aufweist, in dem die elektromagnetische Vorrichtung (32) die Ausgangswelle (20) des elektromechanischen Aktuators (11) relativ zu dem Gehäuse (17) rotatorisch blockiert, und einen zweiten Zustand, in dem die Ausgangswelle (20) des elektromechanischen Aktuators (11) relativ zu dem Gehäuse (17) rotatorisch frei ist, wobei die elektromagnetische Vorrichtung (32) mittels elektrischer Drähte (43) mit der elektrischen Verbindungsvorrichtung (7) verbunden ist, und
wobei die elektromagnetische Vorrichtung (32) mindestens einen Kasten (44) umfasst, **dadurch gekennzeichnet,**
**dass** der elektromechanische Aktuator (11) ferner eine Klammer (45) umfasst, dass der Kasten (44) mindestens eine Nut (46) umfasst,
**dass** die Klammer (45) an dem Kasten (44) angebracht ist und mindestens teilweise in der Nut (46) des Kastens (44) aufgenommen ist,
und **dass** die elektrischen Drähte (43) in der Nut (46) des Kastens (44) mithilfe der Klammer (45) in Position gehalten werden.

2. Elektromechanischer Aktuator (11) für eine Abdeckvorrichtung (3) nach Anspruch 1, **dadurch gekennzeichnet,**
**dass** die Nut (46) des Kastens (44) eine Außenfläche (46a) aufweist,
und **dass** die elektrischen Drähte (43) zwischen der Außenfläche (46a) der Nut (46) des Kastens (44) und der Klammer (45) in Position gehalten werden.

3. Elektromechanischer Aktuator (11) für eine Abdeckvorrichtung (3) nach Anspruch 2, **dadurch gekennzeichnet,**
**dass** das Gehäuse (17) mindestens eine Innenfläche (17c) aufweist, und dass die Klammer (45) mindestens teilweise zwischen der Außenfläche (46a) der Nut (46) des Kastens (44) und der Innenfläche (17c) des Gehäuses (17) angeordnet ist.

4. Elektromechanischer Aktuator (11) für eine Abdeckvorrichtung (3) nach einem der Ansprüche 1 bis 3, **dadurch gekennzeichnet,**
**dass** das Kastens (44) ferner eine erste Nische (59a) und eine zweite Nische (59b) umfasst,
**dass** die Klammer (45) mindestens ein erstes Befestigungselement (60a) und mindestens ein zweites Befestigungselement (60b) umfasst,
und **dass** das erste Befestigungselement (60a) der Klammer (45) in der ersten Nische (59a) des Kastens (44) aufgenommen ist und das zweite Befestigungselement (60b) der Klammer (45) in der zweiten Nische (59b) des Kastens (44) aufgenommen ist.

5. Elektromechanischer Aktuator (11) für eine Abdeckvorrichtung (3) nach Anspruch 4, **dadurch gekennzeichnet,**
**dass** die erste Nische (59a) des Kastens (44) auf einer ersten Seite (C1) des Kastens (44) eingerichtet ist und die zweite Nische (59b) des Kastens (44) auf einer zweiten Seite (C2) des Kastens (44) eingerichtet ist, wobei die zweite Seite (C2) des Kastens (44) der ersten Seite (C1) des Kastens (44) gegenüberliegt,
und **dass** das erste Befestigungselement (60a) der Klammer (45) im Bereich eines ersten Endes (45a) der Klammer (45) angeordnet ist und das zweite Befestigungselement (60b) der Klammer (45) im Bereich eines zweiten Endes (45b) der Klammer (45) angeordnet ist, wobei das zweite Ende (45b) der Klammer (45) dem ersten Ende (45a) der Klammer (45) gegenüberliegt.

6. Elektromechanischer Aktuator (11) für eine Abdeckvorrichtung (3) nach einem der Ansprüche 1 bis 5, **dadurch gekennzeichnet, dass** die Klammer (45) aus einem gefaltenen Metalldraht hergestellt ist.

7. Elektromechanischer Aktuator (11) für eine Abdeckvorrichtung (3) nach Anspruch 4 oder 5 oder nach Anspruch 6, **dadurch gekennzeichnet,**
**dass** das erste Befestigungselement (60a) der Klammer (45) durch zwei Haken (60a1, 60a2) hergestellt ist, die aus dem gefalteten Metalldraht geformt sind,
und **dass** das zweite Befestigungselement (60b) der Klammer (45) mindestens einen gekrümmten Abschnitt (60b1, 60b2) des gefalteten Metalldrahts umfasst.

8. Elektromechanischer Aktuator (11) für eine Abdeckvorrichtung (3) nach Anspruch 6 oder nach Anspruch 7, **dadurch gekennzeichnet,**
**dass** die Klammer (45) ferner mehrere gebogene Abschnitte (64) umfasst,
und **dass** die elektrischen Drähte (43) in der Nut (46) des Kastens (44) mittels der gebogenen Abschnitte (64) der Klammer (45) in Position gehalten werden.

9. Elektromechanischer Aktuator (11) für eine Abdeckvorrichtung (3) nach einem der Ansprüche 1 bis 8, **dadurch gekennzeichnet,**
**dass** der Elektromotor (16) mindestens einen Rotor (51) und einen Stator (52) umfasst und dass die elektromagnetische Vorrichtung (32) mit dem Rotor (51) des Elektromotors (16) gekoppelt ist.

10. Abdeckvorrichtung (3), umfassend einen elektromechanischen Aktuator (11) und einen Schirm (2), der auf ein Wickelrohr (4) wickelbar ist, das von dem elektromechanischen Aktuator (11) rotatorisch angetrieben wird, wobei der elektromechanische Aktuator (11) nach einem der Ansprüche 1 bis 9 ist.

11. Abdeckvorrichtung (3) nach Anspruch 10, **dadurch gekennzeichnet, dass** die Abdeckvorrichtung (3) eine Brandschutzvorrichtung ist.

## Claims

1. An electromechanical actuator (11) for a covering device (3), the electromechanical actuator (11) comprising at least:
- a housing (17),
- an electric motor (16),
- an electromagnetic device (32),
- an output shaft (20), and
- an electrical connection device (7),
the electric motor (16) and the electromagnetic device (32) being mounted inside the housing (17),
the electromagnetic device (32) having a first state, in which the electromagnetic device (32) prevents the output shaft (20) of the electromechanical actuator (11) from rotating relative to the housing (17), and a second state, in which the output shaft (20) of the electromechanical actuator (11) is free to rotate relative to the housing (17), the electromagnetic device (32) being connected to the electrical connection device (7) by means of electrical wires (43), and
the electromagnetic device (32) comprising at least one casing (44), **characterised in that** the electromechanical actuator (11) further comprises a clip (45), **in that** the casing (44) comprises at least one groove (46),
**in that** the clip (45) is mounted on the casing (44) and is housed at least partially in the groove (46) of the casing (44),
and **in that** the electrical wires (43) are held in position in the groove (46) of the casing (44) by means of the clip (45).

2. The electromechanical actuator (11) for a covering device (3) according to claim 1, **characterised:**
**in that** the groove (46) of the casing (44) has an outer surface (46a),
and **in that** the electrical wires (43) are held in position between the outer surface (46a) of the groove (46) of the casing (44) and the clip (45).

3. The electromechanical actuator (11) for a covering device (3) according to claim 2, **characterised:**
**in that** the casing (17) comprises at least one internal surface (17c), and in that the clip (45) is arranged at least partly between the outer surface (46a) of the groove (46) of the casing (44) and the internal surface (17c) of the casing (17).

4. The electromechanical actuator (11) for a covering device (3) according to any of claims 1 to 3, **characterized:**
**in that** the casing (44) further comprises a first recess (59a) and a second recess (59b),
**in that** the clip (45) comprises at least one first fastening element (60a) and at least one second fastening element (60b),
and **in that** the first fastening element (60a) of the clip (45) is housed inside the first recess (59a) of the casing (44) and the second fastening element (60b) of the clip (45) is housed inside the second recess (59b) of the casing (44).

5. The electromechanical actuator (11) for a covering device (3) according to claim 4, **characterised:**
**in that** the first recess (59a) of the casing (44) is formed on a first side (C1) of the casing (44) and the second recess (59b) of the casing (44) is formed on a second side (C2) of the casing (44), the second side (C2) of the casing (44) being opposite the first side (C1) of the casing (44),
and **in that** the first fastening element (60a) of the clip (45) is arranged at a first end (45a) of the clip (45) and the second fastening element (60b) of the clip (45) is arranged at a second end (45b) of the clip (45), the second end (45b) of the clip (45) being opposite the first end (45a) of the clip (45).

6. The electromechanical actuator (11) for a covering device (3) according to any of claims 1 to 5, **characterised in that** the clip (45) is produced by means of a bent metal wire.

7. The electromechanical actuator (11) for a covering device (3) according to claim 4 or 5 and according to claim 6, **characterised:**
**in that** the first fastening element (60a) of the clip (45) is formed by two hooks (60a1, 60a2) formed from the bent metal wire,
and **in that** the second fastening element (60b) of the clip (45) comprises at least one curved part (60b1, 60b2) of the bent metal wire.

8. The electromechanical actuator (11) for a covering device (3) according to claim 6 or claim 7, **characterised:**
**in that** the clip (45) further comprises a plurality of bent portions (64),
and **in that** the electrical wires (43) are held in position in the groove (46) of the casing (44) by means of the bent portions (64) of the clip (45).

9. The electromechanical actuator (11) for a covering device (3) according to any of claims 1 to 8, **characterized:**
**in that** the electric motor (16) comprises at least one rotor (51) and a stator (52), and
**in that** the electromagnetic device (32) is coupled to the rotor (51) of the electric motor (16).

10. A covering device (3) comprising an electromechanical actuator (11) and a screen (2) which can be wound onto a winding tube (4) rotated by the electromechanical actuator (11), wherein the electromechanical actuator (11) is in accordance with any one of claims 1 to 9.

11. The covering device (3) according to claim 10, **characterised in that** the covering device (3) is a fire protection device.
